**Europäisches Patentamt**

**European Patent Office**

**Office européen des brevets**

(11) Veröffentlichungsnummer: **0 111 858**
**A2**

(12) # EUROPÄISCHE PATENTANMELDUNG

(21) Anmeldenummer: **83112443.3**

(22) Anmeldetag: **10.12.83**

(51) Int. Cl.³: **A 01 B 13/00**
**A 01 B 13/16, A 01 B 33/02**

(30) Priorität: **15.12.82 FI 824301**

(43) Veröffentlichungstag der Anmeldung:
**27.06.84 Patentblatt 84/26**

(84) Benannte Vertragsstaaten:
**AT CH DE FR GB LI SE**

(71) Anmelder: **Sinkkilä, Aarre**

**SF-16630 Tennilä(FI)**

(72) Erfinder: **Sinkkilä, Aarre**

**SF-16630 Tennilä(FI)**

(74) Vertreter: **Patentanwälte Dipl.-Ing. Conrad Köchling**
**Dipl.-Ing. Conrad-Joachim Köchling**
**Fleyer Strasse 135**
**D-5800 Hagen 1(DE)**

(54) **Rotationssteuersystem für die Breithackvorrichtung einer büschelbildenden Forsthackmaschine.**

(57) Die Erfindung betrifft ein Rotationssystem für die Hackvorrichtung (2) einer Büschel bildenden Forst-Hackmaschine, wodurch die Rotation der Hackvorrichtung stufenweise so gebremst oder gestoppt werden kann, daß jede Haue (3) nacheinander ein Loch in der ersten Stufe auswirft, in der zweiten Stufe die Haue (3) der Hackvorrichtung die Oberflächenschicht zwischen dem ausgeworfenen Loch und einem zu bildenden Büschel entfernt, und in der dritten Stufe, während sich die Hackvorrichtung (2) frei drehen kann, die Haue (3) die gelockerte Erde als Büschel hinter sich läßt. Um die vom Startmoment der Bremsstufen diktierten Stechwinkel und Stechtiefe leicht den verschiedenen Bodenqualitäten anpassen zu können, betätigt bei einem bestimmten Drehwinkel der Hackvorrichtung ein erster Impulsfühler einen ersten Verzögerungtaktgeber (6), der nach einer gewissen einstellbaren Verzögerung eine Bremse (11) anziehen kann, um die erste Stufe der Hackvorrichtung (2) auszusetzen. Bei einem bestimmten Drehwinkel der Hackvorrichtung betätigt ein zweiter Impulsfühler (5) einem zweiten Verzögerungstaktgeber (7), der nach einer gewissen Verzögerungszeit die Bremse (11) anziehen kann, um die zweite Stufe der Hackmaschine (2) auszusetzen. Die Dauer der ersten und zweiten Stufe, d.h. die die Drehung anhaltende Bremswirkung, kann jeweils durch einen eigenen Taktgeber (8 und 9) gesteuert werden, dessen Zeitdauer verstellbar ist.

./...

Fig. 2

PATENTANWÄLTE

DIPL.-ING. CONRAD KÖCHLING
DIPL.-ING. CONRAD-JOACHIM KÖCHLING

Fleyer Straße 135, 5800 Hagen
Ruf (02331) 8 11 64 + 8 50 33
Telegramme: Patentköchling Hagen

Konten: Commerzbank AG. Hagen
(BLZ 450 400 42) 3 515 095
Sparkasse Hagen 100 012 043
Postscheck: Dortmund 5989 - 460

VNR: ..........................................................................

Lfd. Nr. .......A 5643/83.............................................

vom .......9. Dezember 1983.............................

<u>Rotationssteuersystem für die Breithack-
vorrichtung einer büschelbildenden Forsthack-
maschine</u>

In der Forstwirtschaft ist es allgemein üblich,
zum Pflanzen von Baumsetzlingen den Boden
mechanisch aufzuhacken oder zu lockern, um den
mineralischen Boden von unterhalb der Vegetation und der organischen Oberfläche herauszuholen. Die Qualität des Bodens variiert jedoch
dramatisch, einmal ist er feucht, manchmal
trocken, und die Dicke der organischen Oberflächenschicht variiert ebenfalls.

Allgemeine Aufgabe der Erfindung ist die Erstellung einer Forsthackmaschine, die so weit

- 2 -

wie möglich imstande ist, die Bodenqualität
zu berücksichtigen.

Die Erfindung bezieht sich auf ein Rotationssteuersystem für die Hackvorrichtung einer
Büschel bildenden Forsthackmaschine, mit der
die Rotation der Hacke stufenweise so gebremst oder gestoppt werden kann, daß jede
Haue jeweils ein Loch in der ersten Stufe
gräbt, in der zweiten Stufe entfernt die Haue
einer Hackvorrichtung etwas von der Oberflächenschicht zwischen dem fertigen Loch
und einem entstehenden Büschel, und in der
dritten Stufe läßt die Haue, wenn sich die
Hackvorrichtung frei drehen läßt, den lockeren
Boden als Büschel zurück.

In der ersten Stufe oder dem ersten Stadium geht
die hackende Haue im wesentlichen nach unten und
ihr Steckwinkel ist so, daß ein relativ tiefes
Loch gemacht werden kann. So kann der mineralische Boden aus dem Loch freigelegt werden,
selbst wenn er ziemlich tief liegt. In der
zweiten Stufe vermischt sich der mineralische
Boden mit der organischen Oberflächenschicht,
die in der dritten Stufe als Büschel zurückgelassen wird. Dies bietet die folgenden Pflanzmöglichkeiten. An feuchten Stellen kann ein Setzling oben auf das so erzielte Büschel gepflanzt werden. An trockenen Stellen kann ein Setzling in dem Loch gepflanzt werden und so die Wasseransammlung im Loch ausnutzen. Oder ein Setzling kann in dem Raum zwischen dem Loch und dem Büschel gepflanzt werden, wo Vegatation und organische Oberflächenschicht entfernt wurden. Nach dem Pflanzen müssen die Wurzeln eines Setzlings bis zum mineralischen Boden nach unten gesteckt werden. Der in einem Büschel enthaltene mineralische Boden stammt aus dem Loch.

Um die bestmöglichen Ergebnisse zu erzielen, müssen der Stechwinkel und damit die Stechtiefe einer Haue entsprechend den verschiedenen Bodenqualitäten verstellbar sein. Um die Verstellung oder Steuerung auch der praktischen Arbeit anzupassen, muß man dafür sorgen, daß ein Fahrer die Steuerung während der Fahrt vom Fahrerhaus aus bedienen kann. Der Stechwinkel einer Haue kann verstellt werden, indem man die Startzeit der Bremsstufen der Rotation der Hackvorrichtung verstellt.

Ein Steuersystem nach der Erfindung ist dadurch

- 4 -

gekennzeichnet, daß bei einem gewissen Drehwinkel einer Hackvorrichtung ein erster
Impulsfühler einen ersten Verzögerungstaktgeber betätigt, der nach einer verstellbaren
Verzögerungszeit die Bremse für den Anfang
der ersten Stufe der Hackvorrichtung anzieht
und daß bei einem bestimmten Drehwinkel der
Hackvorrichtung ein zweiter Impulsfühler einen
zweiter Verzögerungstaktgeber betätigt, der
nach einer verstellbaren Verzögerungszeit die
Bremse für den Anfang der zweiten Stufe einer
Hackmaschine anzieht. Durch Regeln der Verzögerungszeiten der Taktgeber kann der Fahrer
einer die Forsthackmaschine ziehenden Arbeitsmaschine während des Fahrens den Stechwinkel
einer Haue steuern und damit auch die Stechtiefe
während der ersten und zweiten Betriebsstufe,
in der die Haue ein Loch auswirft und dann die
Oberflächenschicht entfernt.

Nach einer bevorzugten Ausführungsform der
Erfindung kann auch die Dauer der ersten und
zweiten Stufe jeweils durch deren eigenen Taktgeber gesteuert werden, wobei die Taktgeber die
Bremszeit bestimmen. So kann das Tiefen- und
Längenverhältnis eines Loches bestimmt werden,
ebenso die Tiefe und Länge der auf das Loch
folgenden Oberflächenschicht, die entfernt wird.

- 5 -

Die Erfindung ist nachstehend im einzelnen
unter Bezugnahme auf die beigefügten Zeichnungen beschrieben. Darin zeigt:

Fig. 1 die Stellungen einer Hackvorrichtung in
ihren verschiedenen Arbeitsstufen sowie
die verschiedenen Pflanzalternativen, die
im Boden mittels dieser Arbeitsstufen
ermöglicht sind;

Fig. 2 eine Seitenansicht einer Forsthackmaschine,
wobei im Blockdiagramm ein Rotationssteuersystem für eine damit verbundene
Hackvorrichtung gezeigt ist.

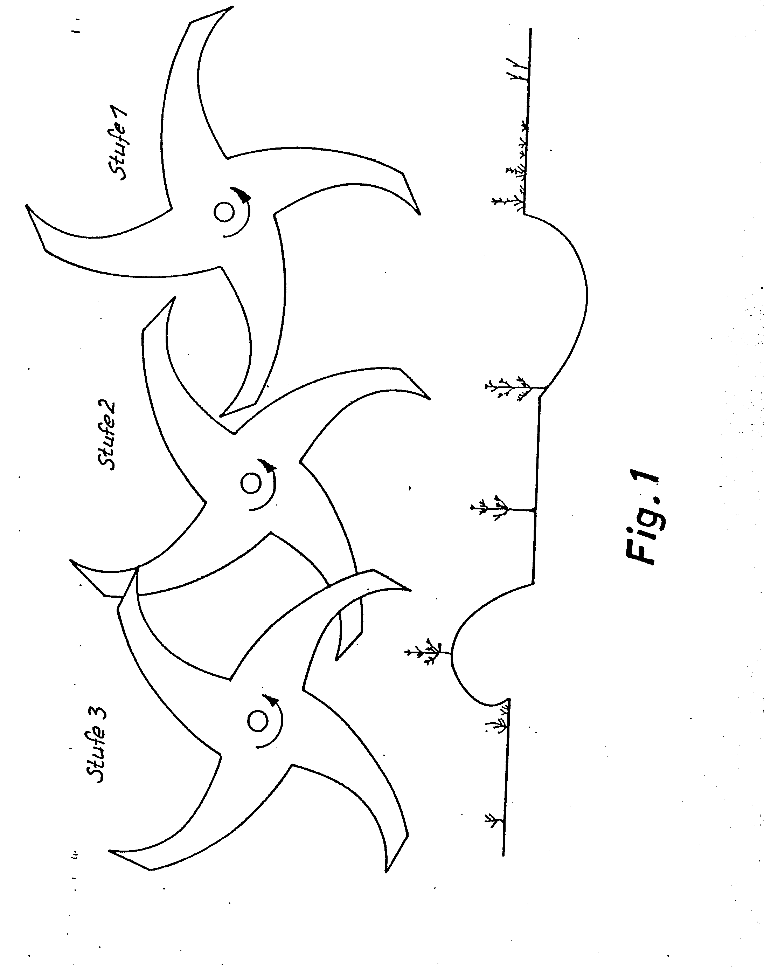

Die verschiedenen Arbeitsstufen einer Hackvorrichtung werden zuerst unter Bezugnahme auf
Fig. 1 erklärt. In Stufe 1 ist die nach unten
gerichtete Haue einer Hackvorrichtung in einer
Stellung, in der sie relativ tief in den Boden
eindringt, und zwar wegender Stellung und der
Form dieser Haue. Nach einer vorbestimmten
Zeitdauer läßt sich die Hackvorrichtung ein
wenig nach hinten drehen, so daß sie die Haue
(Stufe 2) in eine Stellung bringt, in der sie
nicht so stark in den Boden einzudringen vermag

- 6 -

wie in Stufe 1. In der Stellung der Stufe 2 arbeitet die Haue nur, um die Vegetations- und Oberflächenschicht zu entfernen, während gleichzeitig der Mineralboden, der aus einem in Stufe 1 gemachten Loch herausgeholt wurde, sich mit der Oberflächenschicht vermischt. Nach einer bestimmten Zeitdauer läßt sich die Hackvorrichtung so weit drehen, daß die folgende Haue die Stellung von Stufe 1 einnimmt und die hochfahrende Haue den Boden vor sich als ein Büschel zurückläßt (Stufe 3). Man kann aus Fig. 1 erkennen, daß diese Tätigkeit mehrere Pflanzmöglichkeiten bietet, je nach den verschiedenen Arbeitsstufen einer Hackmaschine.

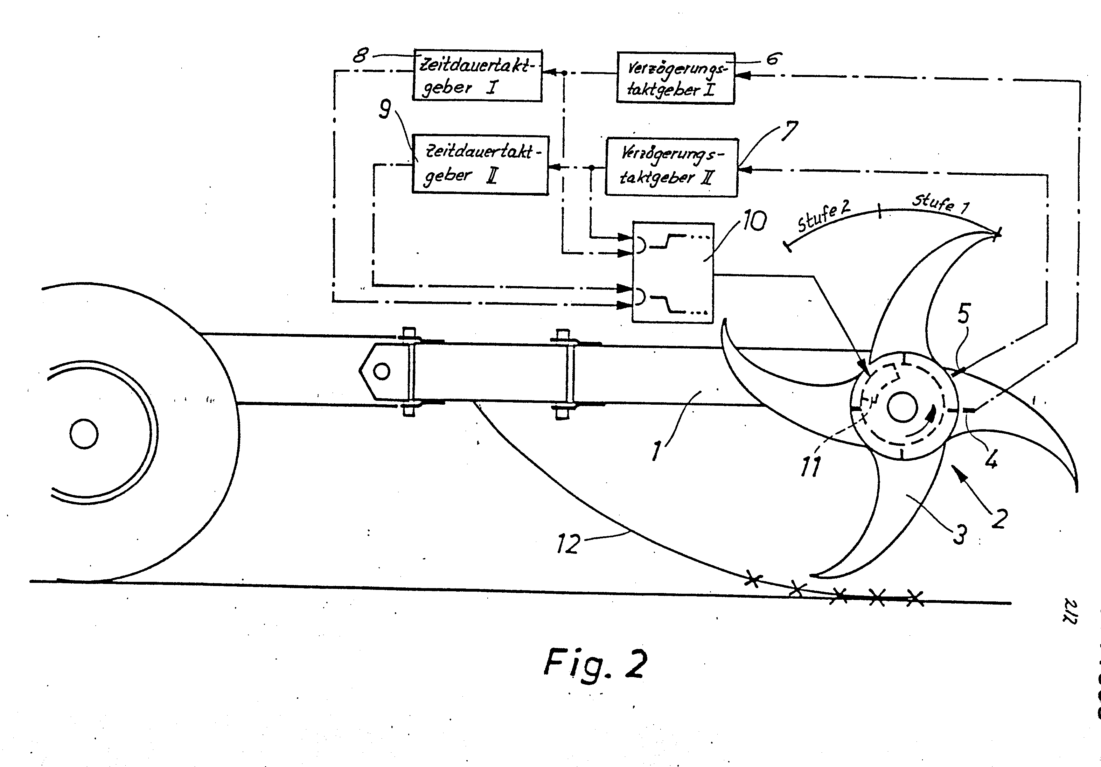

Unter Bezugnahme auf Fig. 2 befaßt sich die folgende Beschreibung mit einem Rotationssteuersystem für eine Hackvorrichtung. Dieses System bewirkt die in Fig. 1 gezeigte Sequenz auf steuerbare Art und Weise. Im Hinterende eines Kraftfahrzeugs, z.B. eines Traktors, wird mit einer Zugstange 1 eine Hackvorrichtung 2 angekuppelt. Diese umfaßt ein drehbar gelagertes Getriebe mit Hackenblättern oder Hauen 3, die im wesentlichen radial davon abstreben. Während die Hackvorrichtung gezogen wird, wird eine Bremse, z.B. eine Scheibenbremse 11 angezogen, um die Geschwindigkeit der Drehung einer Hackvorrichtung 2 zu bremsen; so dringt diese Haue
3 während der Bremsung in den Boden ein. Stechwinkel und Eindringtiefe der Haue 3 werden von
der Winkelstellung der Haue 3 bestimmt. Um diese
Winkelstellung für Stufe 1 und 2 zu verstellen,
ist die Hackvorrichtung mit einem nachstehend
beschriebenen Steuersystem ausgerüstet.

Die frühestmögliche Startzeit für Stufe 1 wird
bei jeder Haue 3 von einem Impulsfühler 4 bestimmt. Wenn eine Haue 3 diese frühestmögliche
Stellung von Stufe 1 einnimmt (in Fig. 2 gezeigt),
gibt der Impulsfühler 4 einen Startimpuls an
einen Verzögerungstaktgeber 6 ab, der nach einer
einstellbaren Verzögerungszeit einen Betätigungsimpuls für sowohl einen Stufendauertaktgeber 8
als auch für einen Steuerkreis 10 von Bremse 11 abgibt. Steuerkreis 10 schaltet die Bremse 11 ein,
wodurch die Drehung von Hackvorrichtung 2 gestoppt wird und die Haue 3 beginnt, in den Boden
einzudringen, und zwar mit einem auf Grund der
im Verzögerungstaktgeber 6 eingestellten Verzögerungszeit festgelegten Stechwinkel. Nach
Ablauf der Zeit, die auch im Phasendauertaktgeber
8 verstellt und eingestellt werden kann, gibt der
Taktgeber 8 einen Impuls ab an den Steuerkreis 10, der die Bremse 11 löst und der Hackvorrichtung
2 gestattet, sich in die Stellung von Stufe 2
zu drehen. Die frühestmögliche Startstellung
von Stufe 2 wird von Impulsfühler 5 vorgegeben.
Der Fühler 5 gibt einen Impuls an einen Verzögerungstaktgeber 7 ab, dessen Verzögerungszeit zur Steuerung des Startmoments von Stufe 2
verstellbar ist. Ist die auf den Taktgeber 7 eingestellte Verzögerungszeit abgelaufen, gibt der
Verzögerungstaktgeber 7 einerseits einen Betätigungsimpuls an einen Stufendauertaktgeber 9
und andererseits an den Bremssteuerkreis 10 ab.
Der Steuerkreis 10 schaltet die Bremse 11 ein
und stoppt so die Drehung der Hackmaschine 2,
wodurch die Haue 3 die Entfernung der Oberflächenschicht gemäß Stufe 2 ausführt. Der dadurch diktierte Stechwinkel oder Kratzwinkel und
die Eindringtiefe hängen also von der auf dem
Verzögerungstaktgeber 7 eingestellten Verzögerungszeit ab. Ist die für die Bestimmung der Bremszeit von Stufe 2 auf dem Stufendauertaktgeber 9
festgesetzte Zeit abgelaufen, gibt Taktgeber 9
einen Impuls an Steuerkreis 10 ab, der die Bremse
11 löst und der Hackvorrichtung 2 gestattet, sich
zu drehen, um, wie in Stufe 3 gezeigt, ein
Büschel zu bilden. Die freie Rotation geht weiter,
bis die Impulsvorrichtung einer folgenden Haue 3 den Impulsfühler 4 erreicht und nach der auf dem Verzögerungstaktgeber 6 eingestellten Zeit die Bremse 11 die Rotation der Hackvorrichtung 2 stoppt.

Ein wesentlicher Teil der Erfindung ist die Funktion der Verzögerungstaktgeber 6 und 7, da es mit Hilfe dieser Taktgeber leicht ist, den Stechwinkel von Haue 3 während der Betriebsstufen 1 und 2 vom Fahrerhaus aus zu verstellen. Andererseits werden die Stufendauer-Taktgeber 8 und 9 zur Steuerung der Dauer des Lochgrabens und der folgenden Oberflächenschicht-Entfernung verwendet. Diese Steuerung ist auch deshalb notwendig, weil die Fahrgeschwindigkeiten auf verschiedenartigem Gelände unterschiedlich sind. Die Steuerung kann auch automatisch in Abhängigkeit von der Fahrgeschwindigkeit bewerkstelligt werden. Eine Änderung der Fahrgeschwindigkeit kann die in den Taktgebern entsprechend der Fahrgeschwindigkeit eingestellte Zeit ändern, indem ein Meßzähler für die Taktgeschwindigkeit benutzt wird.

Dank der flexiblen Steuermöglichkeiten kann eine Forsthackvorrichtung, die mit einem Steuersystem der Erfindung ausgerüstet ist, auch auf felsigem Boden betrieben werden. Die Vorrichtung sammelt

- 10 -

keine Holzspäne oder Unterholz vor sich an. Die
Hackvorrichtung läßt sich leicht ziehen; sie
trägt so zur Kraftstoffersparnis und zur geringen Beanspruchung eines Traktors bei.

Um ungebührend dicke Schichten von Unterholz
oder Moos unter einem zu formenden Büschel nicht
auftreten zu lassen, wodurch der Kontakt zwischen
dem Mineralboden in dem Büschel und der festen
Erdschicht unter dem Büschel unterbrechen könnte,
ist der Zugbalken 1 mit einem Schleppnetz 12
versehen, der zwischen den beiden drehbaren
parallelen Getrieben 2 liegt. Das Schleppnetz
12 ist mit einer Greifvorrichtung versehen, die
über das Unterholz, Erde und Moos streift. Bildet
sich auf dem Schleppnetz 12 ein schweres Büschel,
dient die Greifvorrichtung dazu, Unterholz und
Moos zwischen dem Büschel und dem Boden wegzureißen.

- 41 -

Patentansprüche:

1. Büschelbildende Forst-Hackmaschine, umfassend eine Hackvorrichtung (2) in Form eines Antriebes mit mehreren Hauen, wobei die Rotation der Hackvorrichtung stufenweise so gebremst oder gestoppt werden kann, daß jede Haue der Reihe nach in der ersten Stufe mit der gestoppten oder gebremsten Hackvorrichtung (2) ein Loch (Fig. 1, Stufe 1) ausarbeitet und in der letzten Stufe (Stufe 3) mit der frei sich drehenden Hackvorrichtung (2), die gelockerte Erde als Büschel hinter sich läßt, gekennzeichnet durch Elemente (5,7,9,10,11), die während dieser Stufe der freien Rotation vorübergehend die Hackvorrichtung (2) so stoppen oder bremsen, daß eine Zwischenstufe entsteht (Stufe 2), in der die Haue (3) der Hackvorrichtung (2) eine Oberflächenschicht zwischen dem fertigen Loch und einem aufzubauenden Büschel entfernt.

2. Rotationssteuersystem für die Hackvorrichtung (2) einer Büschel bildenden Forst-Hackmaschine nach Anspruch 1, wobei die Drehung der Hackvorrichtung stufenweise so gestoppt oder gebremst werden kann, daß jede Haue (3) nach-

- 12 -

einander ein Loch in der ersten Stufe auswirft, in der zweiten Stufe die Haue (3)
der Hackvorrichtung (2) die Oberflächenschicht
zwischen dem gebildeten Loch und einem zu bildenden Büschel entfernt und in der dritten
Stufe, während sich die Hackvorrichtung frei
drehen kann, die Haue (3) die gelockerte Erde
als Büschel hinter sich läßt, dadurch gekennzeichnet, daß bei einem bestimmten Drehwinkel
der Hackvorrichtung (2) ein erster Impulsfühler (4) einen ersten Verzögerungstaktgeber
(6) betätigt, der nach einer gewissen Verzögerungszeit eine Bremse (11) zum Aussetzen
der ersten Stufe der Hackvorrichtung (2)
anzieht und daß bei einem bestimmten Drehwinkel der Hackvorrichtung (2) ein zweiter
Impulsfühler (5) einen zweiten Verzögerungstaktgeber (7) betätigt, der nach einer gewissen
Verzögerungszeit die Bremse (11) anzieht, um
die zweite Stufe der Hackmaschine (2) auszusetzen.

3. Rotationssystem nach Anspruch 2, dadurch gekennzeichnet, daß die Dauer der ersten und
zweiten Stufen, d.h. die die Drehung der Hackvorrichtung (2) anhaltende Bremswirkung, jeweils
von einem eigenen Taktgeber (8 und 9) gesteuert
ist, dessen Zeitdauer verstellbar ist.

- 13 -

4. Steuersystem nach Anspruch 3, dadurch gekennzeichnet, daß die Taktgeber (6 und 7) nach
einer gewissen Verzögerungszeit Betätigungsimpulse an die Stufendauer-Taktgeber (8 und
9) aussenden sowie an die Bremse (11), die
für die von den Stufendauer-Taktgebern (8 und
9) vorgebenen Zeitdauer angezogen wird.

5. Büschelbildende Forst-Hackmaschine mit dem in
einem der Ansprüche 1 bis 4 beschriebenen
Steuersystem, dadurch gekennzeichnet, daß
die Zugstange (1) der Hackvorrichtung (2) mit
einem Schleppnetz (12) versehen ist, das
über den Boden schleppbar ist, und sich
zwischen den benachbarten Hauen (3) der Hackvorrichtung erstreckt, wobei dieses Schleppnetz (12) mit einer Greifvorrichtung ausgerüstet ist, die Unterholz und Oberflächenschicht wegreißt, welches sich zwischen dem
Boden und einem auf dem Schleppnetz aufgebauten Büschel gebildet haben.

Stufe 3    Stufe 2    Stufe 1

Fig.1

212

Fig. 2

(Labels: Verzögerungs-taktgeber I — 6; Verzögerungs-taktgeber II — 7; Zeitdauertakt-geber I — 8; Zeitdauertakt-geber II — 9; 10; Stufe 1; Stufe 2; 11; 1; 2; 3; 4; 5; 12)